# EUROPEAN PATENT APPLICATION

(11) **EP 2 705 993 A2**
(43) Date of publication of application: **12.03.2014**
(21) Application number: 13183569.6
(22) Date of filing: 09.09.2013
(51) Int. Cl.: B60S 1/40, B60S 1/38

(54) **Wiper device for cleaning vehicle windows**

(30) Priority: 10.09.2012 DE 102012108420
(71) Applicant: Valeo Systèmes d'Essuyage, 78321 Le Mesnil Saint Denis (FR)
(72) Inventor: Schaeuble, Michael, 71665 Vaihingen/Enz (DE)
(74) Representative: Callu Danseux, Violaine

(57) **Abstract**

The invention relates to a wiper device (100) for the cleaning of vehicle windows, with a wiper arm (10) and a wiper blade (15) exchangeably fastened to the wiper arm (10), wherein the wiper blade (15) is fastened to the wiper arm (10) by means of a wiper blade adapter (40), which engages with an elastically arranged actuating head (52), with the formation of a detent connection, into a corresponding opening (20) of the wiper arm (10), and with a coupling element (25) for feeding a washing fluid to the wiper blade (15), wherein the coupling element (25) consists of plastic and is fastened in the wiper arm (10), wherein the coupling element (25) has a first connecting piece (31), which is able to be connected with a supply line on the vehicle side, and a second connecting piece (32), which engages in a form-fitting manner into a mount (46) of the wiper blade adapter (40), and wherein the connection between the second connecting piece (32) and the mount (46) is sealed by means of a sealing element.

## Description

### Prior art

The invention relates to a wiper device for cleaning vehicle windows, as per the preamble of Claim 1.

A wiper device of said type is already known from practice and comprises a wiper blade, on the longitudinal sides of which are formed nozzle openings via which a washing fluid can be dispensed onto the vehicle window. The hydraulic connection between the nozzle openings in the wiper blade and a storage vessel arranged in the motor vehicle is realised via a hose connection arranged in the wiper arm, said hose connection being connected, in the fastening region of the wiper blade to the wiper arm, to a coupling element which in turn can be connected to a wiper blade adapter assigned to the wiper blade. During the installation or exchange of the wiper blade, in addition to the purely mechanical connection between the wiper blade and the wiper arm, the hydraulic connection between a connecting piece arranged on the wiper blade adapter and a connector, which interacts with the connecting piece, on the coupling element is also produced at the same time. For the operation of the wiper device, it is essential that the connection between the wiper blade adapter and the coupling element is hydraulically sealed in order that no washing fluid escapes from the region of the coupling element. For this purpose, use is normally made of O-rings which for example extend around the outer circumference of a connecting piece and are themselves arranged radially within a receptacle.

### Disclosure of the invention

Taking as a starting point a wiper device for cleaning vehicle windows as per the preamble of Claim 1, it is the object of the invention to design an alternative sealing concept between a wiper blade adapter and a coupling element which dispenses with the use of O-rings, wherein relatively simple installation and a good sealing action should be achieved.

According to the invention, in the case of a wiper device for cleaning vehicle windows having features of Claim 1, said object is achieved in that the sealing element is constructed as a sealing disc and is arranged under axial prestress between the second connecting piece and the mount, in that the coupling element has an aperture, which is aligned with the opening in the wiper arm, and in that the actuating button penetrates the aperture and lies against a face surface of the aperture facing the wiper arm. By means of the design of the aperture according to the invention and of the actuating button which penetrates the aperture, it is made possible for the coupling element to be pressed under axial prestress against the sealing element, whereby a reliable hydraulic seal is formed. Furthermore, the use of a sealing disc as a sealing element has the advantage that the connecting region between the coupling element and the connecting piece on the wiper blade adapter can be of particularly compact form with regard to its diameter.

Advantageous refinements of the wiper device according to the invention for cleaning vehicle windows are specified in the subclaims. The scope of the invention encompasses all combinations of at least two features disclosed in the claims, in the description and/or in the figures.

To avoid overdeterminacy of the elements composed of actuating button, coupling element and opening on the wiper arm, in order in particular that manufacturing can be carried out with relatively large tolerances, it is provided in one preferred refinement that the aperture has a greater length than the actuating button in the longitudinal direction of the wiper blade.

A particularly simple fastening of the coupling element to the wiper arm without the use of additional, separate fastening elements is achieved if the coupling element is fastened in mounts of the wiper arm by means of two bearing pins arranged on the sides of the coupling element.

To make it possible for the coupling element to be pressed with the required axial force against the sealing element or the sealing disc by means of the actuating button, it is also provided that the bearing pins are arranged in the mounts with play in the longitudinal direction of the wiper blade, in particular through an embodiment of the mounts as elongated holes.

In a refinement of the coupling element which is preferred from a design aspect, it is provided that the coupling element is constructed so as to be U-shaped in cross section, and that the aperture is constructed on a plate-shaped central region, from which at its two longitudinal sides respectively a leg section runs out, which leg section is arranged elastically on the central region.

It is furthermore preferable that the central region of the coupling element lies with its upper side against the inner side of the wiper arm, and that one of the leg sections carries the two connecting pieces. In this way, the coupling element is oriented with respect to the wiper arm, that is to say in particular the coupling element cannot tilt in its bearing (bearing pins), whereby the insertion of the wiper blade adapter into the connecting piece of the coupling element is facilitated or made possible. Furthermore, as a result of the arrangement of the two connecting pieces on one leg section, the coupling element has a relatively small length in the axial direction, that is to say in the wiper blade longitudinal direction.

To apply the required pressing force to the sealing element by means of the actuating button of the wiper blade adapter, the opening in the wiper arm has, in the wiper blade longitudinal direction, a length corresponding to the length of the actuating button.

During the installation of the wiper blade on the wiper arm, it is necessary for the actuating button to be inserted into the aperture of the connecting element. Here, the actuating button initially passes into operative connection with a face side or a face surface of the coupling element. To make it possible for the elastically mounted actuating button to pass from the face side or face surface of the coupling element into the region of the aperture, the coupling element has, on its underside on the side facing away from the wiper arm, a leading chamfer for the actuating button.

Further advantages, features and details of the invention will emerge from the following description of preferred exemplary embodiments and on the basis of the drawing.

In the drawing:
- Figure 1: shows the fastening region of a wiper blade to a wiper arm in the case of a wiper device according to the invention, in a perspective view,
- Figure 2: shows the constituent parts of the wiper device according to the invention in an exploded illustration,
- Figure 3: shows a longitudinal section through the wiper device as per Figure 1 in the region of the coupling element, and
- Figure 4: shows the region of the coupling element as per Figure 3 in an enlarged illustration, likewise in longitudinal section.

Identical elements or elements of identical function are denoted by the same reference signs in the figures.

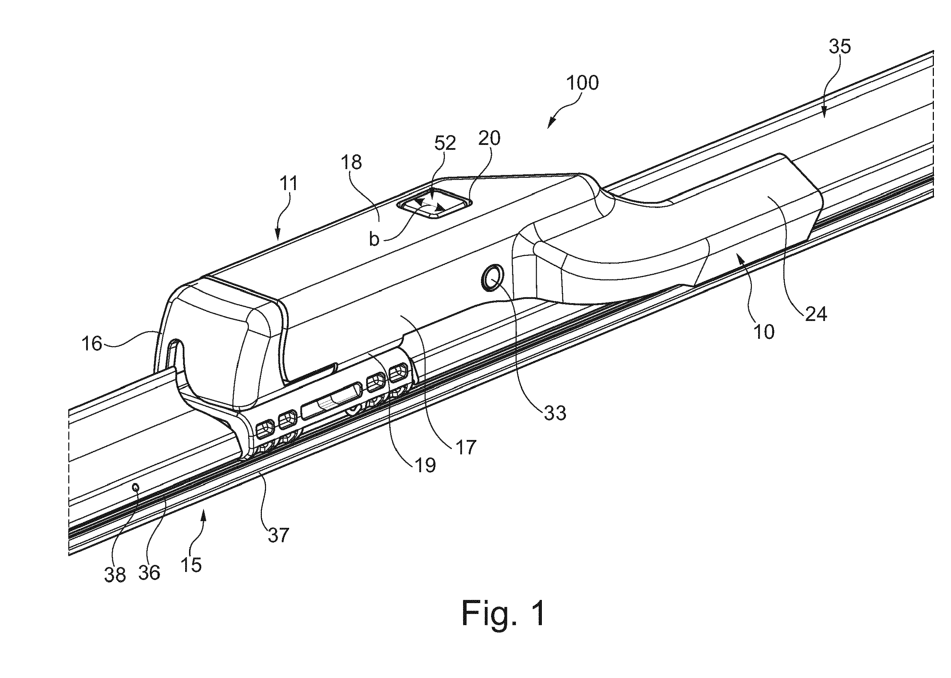

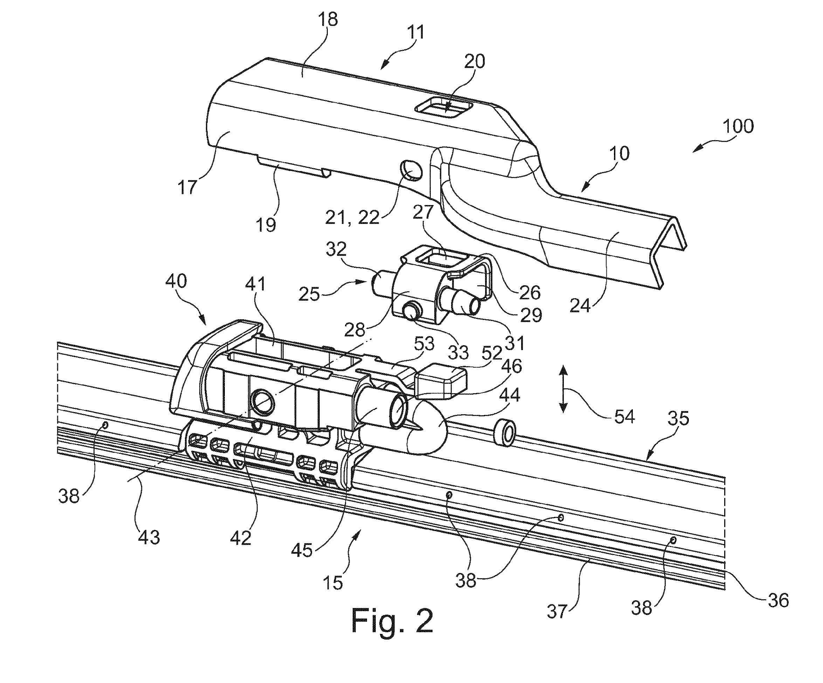

Figures 1 and 2 show a wiper device 100 according to the invention for cleaning a vehicle window (not illustrated). The vehicle window may be a front window or a rear window. The wiper device 100 comprises a wiper arm 10 which is connected to a wiper drive (wiper motor) which is not illustrated. The wiper arm 10, which is composed of sheet metal, is formed as a punched/bent part in the conventional manner and has a wiper arm end 11, in the region of which a wiper blade 15 is exchangeably fastened to the wiper arm 10. For this purpose, the wiper arm 10, as can be seen from a juxtaposition of Figures 1 and 2, has in the connecting region to the wiper blade 15 a U-shaped cross section with two side walls 16, 17, and with a top side 18 which connects the two side walls 16, 17 to one another. On the bottom side, facing toward the wiper blade 15, of the two side walls 16, 17, there is integrally formed in each case one inwardly projecting retention portion 19.

An opening 20, which is square (with rounded corners) in the exemplary embodiment, is formed in the manner of an aperture on the top side 18 of the wiper arm end 11. Furthermore, at the level of the opening 20, there is formed on the two side walls 16, 17 of the wiper arm 10 in each case one mount 21 in the form of an elongated hole 22.

In the exemplary embodiment illustrated, the wiper arm end 11, in the region of which the wiper blade 15 is fastened to the wiper arm 10, is arranged laterally offset with respect to an arm section 24 of the wiper arm 10, said arm section likewise having a U-shaped cross section in the region illustrated in Figure 2.

In the wiper arm 10 there is arranged a coupling element 25 which is produced from plastic in an injection moulding process. The coupling element 25 has a plate-shaped central region 26 in which a rectangular aperture 27 is formed. At the two longitudinal sides of the central region 26, in each case one leg section 28, 29 is integrally connected to the central region 26, wherein the two leg sections 28, 29 are arranged on the central region 26 so as to be elastically flexible in a transverse direction. One leg section 28, which is of approximately block-shaped form, comprises two connecting pieces 31, 32 which are arranged in the wiper blade longitudinal direction and in alignment with one another. The first connecting piece 31 is connected to a hose line (not illustrated in the figures) via which a washing fluid can be conducted to the coupling element 25 from a storage vessel situated in the motor vehicle, wherein the hose line is arranged within the cross section of the wiper arm 10. The second connecting piece 32 is at least indirectly connected to the wiper blade 15.

The fastening of the coupling element 25 to the wiper arm 10 is realised by means of two bearing pins 33 which are arranged on the two outer sides of the leg sections 28, 29 and which, in the exemplary embodiment, have a circular cross section, only one bearing pin 33 being visible in the figures. The diameter of the bearing pins 33 is adapted to the groove width of the elongated holes 22, such that the coupling element 25 is positioned in the mounts 21 of the wiper arm 10 in a plane perpendicular to the top side 18 of the wiper arm 10 but has a certain movement clearance in the wiper blade longitudinal direction.

The installation of the coupling element 25 on the wiper arm 10 takes place by pressing the two leg sections 28, 29 against one another, such that the two bearing pins 33 can engage into the mounts 21 of the wiper arm 10. When the coupling element 25 is in the installed state, the central region 26 lies with its top side areally against the inner side of the wiper arm 10, wherein the aperture 27 of the coupling element 25 is oriented with the opening 20 on the top side 18 of the wiper arm 10.

The wiper blade 15 has a wiper blade body 35 with a wiper rubber 36, the wiper lip 37 of which bears against a vehicle window when the wiper blade 5 is in the operating position. On at least one longitudinal side of the wiper blade body 35, preferably on the two opposite longitudinal sides of the wiper blade body 35, there are arranged or formed spray openings 38 by means of which the washing fluid can be sprayed onto the vehicle window.

The fastening of the wiper blade 15 to the wiper arm 10 is realised by means of a wiper blade adapter 40 which is connected to the wiper blade body 35. The wiper blade adapter 40 is composed of a wiper-blade-side adapter element 41, which is directly connected to the wiper blade body 35, and of a wiper-arm-side adapter element 42, which in turn is directly connected to the wiper arm 10. The two adapter elements 41, 42 are arranged so as to be pivotable relative to one another about an axis 43. Furthermore, a short piece of a flexible liquid hose 44 is arranged between the two adapter elements 41, 42, said liquid hose serving for the supply of washing fluid. The wiper-arm-side adapter element 42 has, on a longitudinal side on the side facing toward the wiper arm 10, a mounting piece 45 with a cylindrical mounting opening 46. The diameter of the mounting opening 46 is adapted to the outer diameter of the second connecting piece 32, such that the connecting piece 32 can be inserted with minimal radial play into the mounting opening 46.

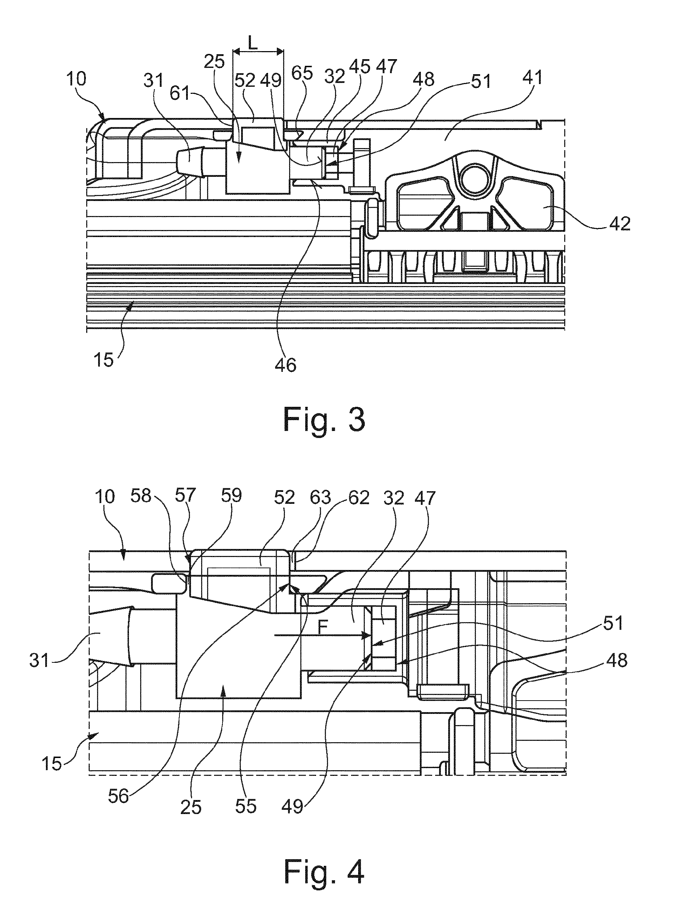

As can be seen in particular from a juxtaposition of Figures 2 to 4, a sealing element in the form of a sealing disc 47 is arranged within the mounting opening 46. In the installed state of the wiper blade 15 on the wiper arm 10, as can be particularly clearly from Figure 4, the sealing disc 47 lies with its one face surface 48 against the base of the mounting opening 46, whereas the opposite, second face surface 49 lies against the face surface 51 of the second connecting piece 32 under elastic prestress with a force F. By means of the force F, the required sealing action is attained which permits a hydraulic seal. The second connecting piece 32 is in turn connected to one end of the liquid hose 44, the other end of which is coupled to the wiper-blade-side adapter element 41. From the wiper-blade-side adapter element 41, the washing fluid is conducted to the spray openings 38 via washing fluid ducts (not illustrated) on the longitudinal sides of the wiper blade body 35, as is known per se from the prior art.

On the top side of the wiper-arm-side adapter element 42 on the side facing toward the wiper arm 10, there is arranged a block-shaped actuating button 52 which has a rectangular or square outline in plan view. The actuating button 52 is connected to the wiper-arm-side adapter element 42 via a spring tongue 53, wherein a movement of the actuating button 52 in the direction of the double arrow 54 is permitted by means of the spring tongue 53.

The width b of the actuating button 52 is adapted to the width of the opening 20 and to the width of the aperture 27, that is to say the actuating button 52 has a width b which is smaller than the corresponding width of the opening 20 and of the aperture 27 only to an insignificant extent. The length 1 of the actuating button 52 is slightly smaller than the corresponding lengths of the opening 20 and of the aperture 27. As can be seen in particular from Figure 4, when the wiper blade 15 is installed, that face surface 55 of the actuating button 52 which faces toward the wiper arm 10 or the sealing disc 47 lies against the surface 56, which interacts with said face surface, of the aperture 27 of the coupling element 25. By contrast, a gap 59 is formed between the face surface 57, which is situated opposite in the longitudinal direction, of the actuating button 52 and the surface 58 of the aperture 27. It is furthermore essential that the face surface 57 of the actuating button 52 lies against the surface 61 of the opening 20, whereas a gap 63 may be formed between the face surface 55 and the surface 62 of the opening 20.

The central region 26 of the coupling element 25 has, on its underside on the side facing away from the wiper arm 10, a leading chamfer 65 by means of which the actuating button 52 can deflect in an elastic manner during the installation of the wiper blade 15 on the wiper arm 10.

The installation of the wiper blade 15 on the wiper arm 10 takes place as follows: The wiper blade 15 is inserted by way of its wiper blade adapter 40 into the open cross section of the wiper blade end 11, wherein, by means of the retention portions 19 on the wiper arm 10, said retention portions being arranged in operative connection with the wiper-arm-side adapter element 42, the wiper blade 15 is guided within the cross section of the wiper are 10. As the wiper blade 15 is pushed into the wiper arm 10, the actuating button 52 deflects downward when it comes into contact with the leading chamfer 65 of the coupling element 25, such that the wiper blade 15 can be pushed in to such an extent that the actuating button 52 passes into the region of the opening 20 of the wiper arm 10 and of the aperture 27 of the coupling element 25. As a result of the geometric arrangement and design of the actuating button 52, of the opening 20 and of the aperture 27, the coupling element 25 is in this case pressed, by way of its second connecting piece 32, into the mounting opening 46 of the mounting piece 45 such that the sealing disc 47 is elastically deformed and, in the process, imparts the required sealing forces for providing a hydraulic seal. When the wiper blade 15 is in the installed state, the actuating button 52 extends both through the aperture 27 of the coupling element 25 and also through the opening 25 of the wiper arm 10. The dismounting of the wiper blade 15 from the wiper arm 10 takes place by pressing the actuating button 52 into the opening 20 of the wiper arm 10 until the actuating button 52 passes out of operative connection with the wiper arm 10 and the coupling element 25. In this position, the wiper blade 15 can be pulled out of the wiper are 10.

The wiper device 100 thus described may be altered or modified in a variety of ways without departing from the concept of the invention.

### List of reference signs

- 10: Wiper arm
- 11: Wiper arm end
- 15: Wiper blade
- 16: Side wall
- 17: Side wall
- 18: Top side
- 19: Retention portion
- 20: Opening
- 21: Receptacle
- 22: Elongated hole
- 24: Arm section
- 25: Coupling element
- 26: Central region
- 27: Aperture
- 28: Leg section
- 29: Leg section
- 31: Connecting piece
- 32: Connecting piece
- 33: Bearing pin
- 35: Wiper blade body
- 36: Wiper rubber
- 37: Wiper lip
- 38: Spray opening
- 40: Wiper blade adapter
- 41: Adapter element
- 42: Adapter element
- 43: Axis
- 44: Liquid hose
- 45: Mounting piece
- 46: Mounting opening
- 47: Sealing disc
- 48: Face surface
- 49: Face surface
- 51: Face surface
- 52: Actuating button
- 53: Spring tongue
- 54: Double arrow
- 55: Face surface
- 56: Surface
- 57: Face surface
- 58: Surface
- 59: Gap
- 61: Surface
- 62: Surface
- 63: Gap
- 65: Leading chamfer

- 100: Wiper device

- b: Width
- 1: Length
- F: Force

## Claims

1. A wiper device (100) for the cleaning of vehicle windows, with a wiper arm (10) and a wiper blade (15) exchangeably fastened to the wiper arm (10), wherein the wiper blade (15) is fastened to the wiper arm (10) by means of a wiper blade adapter (40), which engages with an elastically arranged actuating head (52), with the formation of a detent connection, into a corresponding opening (20) of the wiper arm (10), and with a coupling element (25) for feeding a washing fluid to the wiper blade (15), wherein the coupling element (25) consists of plastic and is fastened in the wiper arm (10), wherein the coupling element (25) has a first connecting piece (31), which is able to be connected with a supply line on the vehicle side, and a second connecting piece (32), which engages in a form-fitting manner into a mount (46) of the wiper blade adapter (40), and wherein the connection between the second connecting piece (32) and the mount (46) is sealed by means of a sealing element,
**characterized in that**
the sealing element is constructed as a sealing disc (47) and is arranged under axial prestressing (F) between the second connecting piece (32) and the mount (46), the coupling element (25) has an aperture (27), which is aligned with the opening (20) in the wiper arm (10), and that the actuating button (52) penetrates the aperture (27) and lies against a face surface (55) of the aperture (27) facing the wiper arm (10).

2. The wiper device according to Claim 1,
**characterized in that**
the aperture (27) has a greater length than the actuating button (52) in the longitudinal direction of the wiper blade.

3. The wiper device according to Claim 1 or 2,
**characterized in that**
the coupling element (25) is fastened in mounts (21) of the wiper arm (10) by means of two bearing pins (33) arranged on the sides of the coupling element (25).

4. The wiper device according to Claim 3,
**characterized in that**
the bearing pins (33) are arranged in the mounts (21) with play in the longitudinal direction of the wiper blade, in particular through an embodiment of the mounts (21) as elongated holes (22).

5. The wiper device according to Claim 3 or 4,
**characterized in that**
the coupling element (25) is constructed so as to be U-shaped in cross-section, and the aperture (27) is constructed on a plate-shaped central region (26), from which at its two longitudinal sides respectively a leg section (28, 29) runs out, which are arranged elastically on the central region (26).

6. The wiper device according to Claim 5,
**characterized in that**
the central region (26) lies with its upper side against the inner side of the wiper arm (10), and one of the leg sections (28) carries the two connecting pieces (31, 32).

7. The wiper device according to one of Claims 1 to 6,
**characterized in that**
the opening (20) in the wiper arm (10) in the longitudinal direction of the wiper blade corresponds to the length of the actuating button (52).

8. The wiper device according to one of Claims 1 to 7,
**characterized in that**
the coupling element (25) has on its underside on the side facing away from the wiper arm (10) a leading chamfer (65) for the actuating button (52).

9. The wiper device according to one of Claims 1 to 8,
**characterized in that**
the two connecting pieces (31, 32) are aligned parallel to the longitudinal direction of the wiper blade.

10. The wiper device according to Claim 9,
**characterized in that**
the wiper arm (10) has a U-shaped cross-section in the connecting region with the wiper blade (15), and the wiper blade adapter (40) is able to be introduced into the wiper arm (10) via the open front face of the wiper arm (10).
